Europäisches Patentamt

European Patent Office

Office européen des brevets

(19)

(11) Veröffentlichungsnummer: **0 257 705 B1**

# (12) EUROPÄISCHE PATENTSCHRIFT

(45) Veröffentlichungstag der Patentschrift: **22.07.92**

(21) Anmeldenummer: **87201559.9**

(22) Anmeldetag: **18.08.87**

(51) Int. Cl.⁵: **H02K 7/14**, H02K 7/106, H02K 21/18, A47J 43/08, A47J 42/56

(54) Kleines elektrisches Haushaltsgerät mit einem umlaufenden Messer.

(30) Priorität: **23.08.86 DE 3628702**

(43) Veröffentlichungstag der Anmeldung:
**02.03.88 Patentblatt 88/09**

(45) Bekanntmachung des Hinweises auf die
Patenterteilung:
**22.07.92 Patentblatt 92/30**

(84) Benannte Vertragsstaaten:
**AT DE ES FR GB IT**

(56) Entgegenhaltungen:
DE-A- 2 136 187
US-A- 3 984 710

ELEKTROTECHNIEK, Band 50, Nr. 19, 14. September 1972, Seiten 741-752, Meppel, NL; H. SCHEMMANN: "Kleine Einphasen-Synchronmotoren mit dauermagnetischem Läufer"

Conference on small electrical machines 30-31 March 1976, pages 39-42, Institution of electrical engineers Savoy Place London WC 2

(73) Patentinhaber: **Philips Patentverwaltung GmbH**
**Wendenstrasse 35 Postfach 10 51 49**
**W-2000 Hamburg 1(DE)**

(84) Benannte Vertragsstaaten:
**DE**

(73) Patentinhaber: **N.V. Philips' Gloeilampenfabrieken**
**Groenewoudseweg 1**
**NL-5621 BA Eindhoven(NL)**

(84) Benannte Vertragsstaaten:
**ES FR GB IT AT**

(72) Erfinder: **Diefenbach, Gerhard**
**Schulstrasse 19**
**W-5100 Aachen(DE)**
Erfinder: **Schemmann, Hugo, Dr.**
**Zwartebergweg 6**
**NL-6371 XD Schaesberg(NL)**
Erfinder: **Bukoschek, Romuald Leander**
**Dr. Pallagasse 28**
**A-9020 Klagenfurt(AT)**

(74) Vertreter: **Kupfermann, Fritz-Joachim, Dipl.-Ing. et al Philips Patentverwaltung GmbH Wendenstrasse 35 Postfach 10 51 49 W-2000 Hamburg 1(DE)**

**Beschreibung**

Die Erfindung bezieht sich auf ein kleines elektrisches Haushaltsgerät mit einem umlaufenden Messer, wie ein Schnitzelwerk, ein Schlagwerk und ein Fleischwolf, bei dem das Messer von einem Elektromotor innerhalb eines mit einem Deckel verschließbaren Behälters antreibbar und beim bzw. vor dem Deckelöffnen rasch anhaltbar ist.

Derartige Haushaltsgeräte sind bekannt. Um ein gefahrloses Arbeiten zu gewährleisten, ist es Vorschrift, daß sichergestellt ist, daß der Benutzer nicht in das umlaufende Messer eingreifen kann. Das Gerät muß also so aufgebaut sein, daß immer dann, wenn der Deckel so weit geöffnet ist, daß der Benutzer mit den Fingern in den Innenraum des Behälters hineingreifen könnte, das Messer bereits zum Stillstand gekommen ist.

Es ist bekannt, zum Abbremsen des Messers besondere Bremsvorrichtungen einzusetzen, die wirksam werden, sobald der Deckel geöffnet wird oder der Motor abgeschaltet wird. Die Vorrichtungen sind notwendig, da bei den bekannten Geräten die natürliche Auslaufzeit der umlaufenden Teile zu lange ist. Die zum Einsatz gebrachten Motoren haben relativ große Schwungmassen und hohe Drehzahlen und weisen keine oder nur geringe magnetische Haltekräfte auf. Die zulässige Auslaufzeit $T_{zul}$ hängt ab von dem Aufbau des Gerätes und der Möglichkeit, beim Öffnungsvorgang des Deckels an das umlaufende Messer greifen zu können; Zeiten von 0,5 bis 1 sec sind dabei noch zulässig.

Aus der Zeitschrift "Elektrotechnik", Band 50, Nr. 19, 14.09.1972, Seiten 741 bis 752, ist eine obere Grenze für das Reibungsmoment bekannt. Danach darf dieses Reibungsmoment nicht größer sein als das kritische Klebemoment, weil der Motor anderenfalls blockieren könnte. Dies führt aber dazu, daß infolge eines zu kleinen Reibungswertes die Anordnung länger auslaufen und damit den Benutzer gefährden kann.

In der Literaturstelle ist auch ausgesagt, daß das Trägheitsmoment begrenzt sein muß, um noch einen Anlauf zu ermöglichen. Dies hat seinen Grund darin, daß bei größer werdendem Trägheitsmoment die Beschleunigung des Gesamt-Systems aus Rotor und Last durch das elektromagnetische Moment zu klein wird, um den Rotor auf die synchrone Drehzahl zu beschleunigen. Eine obere Grenze für das Trägheitsmoment ist auf Seite 39 bis 42 der Konferenz-Veröffentlichung "Small Electrical Machines", Institution of Electrical Engineers, Savoy Place, London WC2, in Formel 18 angegeben. Diese obere Grenze ist abhängig von der Auslegung des Motors und führt zu Trägheitsmomentwerten, die bei größerer Leistung größer werden. Das Problem der Auslaufzeit ist in der Literaturstelle nicht abgehandelt.

Es ist Aufgabe der Erfindung, ein kleines elektrisches Haushaltsgerät der eingangs erwähnten Art zu schaffen, bei dem auf die zusätzliche Bremseinrichtung verzichtet werden kann, ohne daß die zulässige Auslaufzeit $T_{zul}$ überschritten wird.

Die gestellte Aufgabe ist erfindungsgemäß dadurch gelöst, daß der Antriebsmotor ein Einphasensynchronmotor ist und daß der Gesamtaufbau des Systems aus Motor und Belastung derart ausgelegt ist, daß die Differenz zwischen der kinetischen Energie aller umlaufenden Teile und der während des Bremsvorganges innerhalb der zulässigen Auslaufzeit $T_{zul}$ durch Bremsmomente, wie Reibung, vernichteten Energie kleiner ist als die zur Überwindung des Klebemomentes erforderliche Energie, deren Wert gleich dem Amplitudenwert des Klebemomentes ist, entsprechend der Beziehung

$$\frac{1}{2} J_{ges} \cdot \hat{\dot{\theta}}^2 - \int_0^{T_{zul}} M_L \cdot \dot{\theta}\, dt < \hat{M}_{kl}$$

wobei

$J_{ges}$      das gesamte, auf die Achse des Rotors reduzierte Trägheitsmoment aller rotierenden Geräteteile ist,

$\hat{\dot{\theta}}$      der Spitzenwert der mechanischen Motor-Winkelgeschwindigkeit ist,

$\dot{\theta}$      der Augenblickswert der mechanischen Motorgeschwindigkeit ist

$M_L$      das gesamte, auf den Rotor wirkende Bremsmoment ist,

$T_{zul}$      die zulässige Auslaufzeit ist,

$\hat{M}_{kl}$      die Amplitude des Motorklebemomentes ist.

Bei einem derartigen Aufbau des Systems aus Einphasensynchronmotor und Last kommen die Messer

3

innerhalb einer genügend kleinen Auslaufzeit $T_{zul}$ des Motors zum Stillstand und werden durch das magnetische Klebemoment festgehalten. Auch ohne den Einsatz einer Bremsvorrichtung besteht also nicht die Gefahr einer Verletzung, wenn ein Benutzer nach dem Abschalten des Motors und/oder Öffnen des Deckels versehentlich in den Behälter greift.

Bei einem konkreten Beispiel mit einem Einphasensynchronmotor, dessen Massenträgheitsmoment ca. 5 g cm$^2$ beträgt, der ein magnetisches Klebemoment einer Amplitude von ca. 150 cmp aufweist und der eine Winkelgeschwindigkeit von 100 $\pi$/s hat, würde das Messer etwa innerhalb einer Umdrehung des Motors, entsprechend ca. 30 msec, zum Stillstand kommen. Dabei ist angenommen, daß die Reibungsbelastung etwa 50 cmp beträgt. Selbst im Leerlauf, wenn der Motor nur durch die Lagerreibung von etwa 10 cmp belastet ist, kommt das System etwa nach 5 Motorumdrehungen zum Stillstand. Dies entspricht einer Zeit von ca. 130 msec. So schnell kann niemand in den Behälter hineingreifen. Erhöht man das Gesamtträgheitsmoment auf ca. 10 g cm$^2$, ein größeres Trägheitsmoment kann dieser Motor nicht antreiben, so kommt das Gerät bei einer Belastung von 10 cmp nach etwa 9 Umdrehungen der Motorwelle zum Stillstand. Die Bremszeit beträgt auch im letzteren Fall weniger als 270 msec. Auch bei größeren Motoren und ungünstigen Randbedingungen bleibt die Bremszeit damit sicher unter 0,5 sec. Dies ist ein Wert, der bei anderen zusätzlich vorgesehenen Bremsanordnungen als zulässig erachtet wird.

Bei der Auslegung der Messer ist darauf zu achten, daß deren Massenträgheitsmoment innerhalb der Grenzen liegt, die durch die zuvor erwähnte Beziehung vorgegeben ist. Durch Einsatz eines Getriebes kann das auf die Motorwelle wirksame Trägheitsmoment reduziert werden.

Aus der AT-PS 377 871 ist es bekannt, bei einem elektromotorisch angetriebenen Gerät auf einem Getrieberad Anschläge vorzusehen, die an den Enden einer Spiralnut vorgesehen sind. Diese Anschläge dienen der Bewegungsumkehr des Antriebes. Die Anschläge sind nicht als Schnellstop ausgelegt oder verwendbar.

Die Erfindung wird anhand der Zeichnung näher erläutert. Es zeigen:

Fig. 1 in Explosionsdarstellung ein kleines elektrisches Haushaltsgerät, wie beispielsweise einen Zwiebelschneider, mit einem Fußteil und abgenommenem Schneidbehälter mit Schneidwerkzeug und Deckel,

Fig. 2 ein Diagramm des Motorklebemomentes über dem Verdrehungswinkel der Motorwelle,

Fig. 3 einen simulierten Auslaufvorgang eines Einphasensynchronmotors mit Klebemoment, wobei Fig. 3a den Geschwindigkeisverlauf des Rotors über der Zeit und Fig. 3b die Abhängigkeit des Auslaufwinkels von der Zeit darstellt.

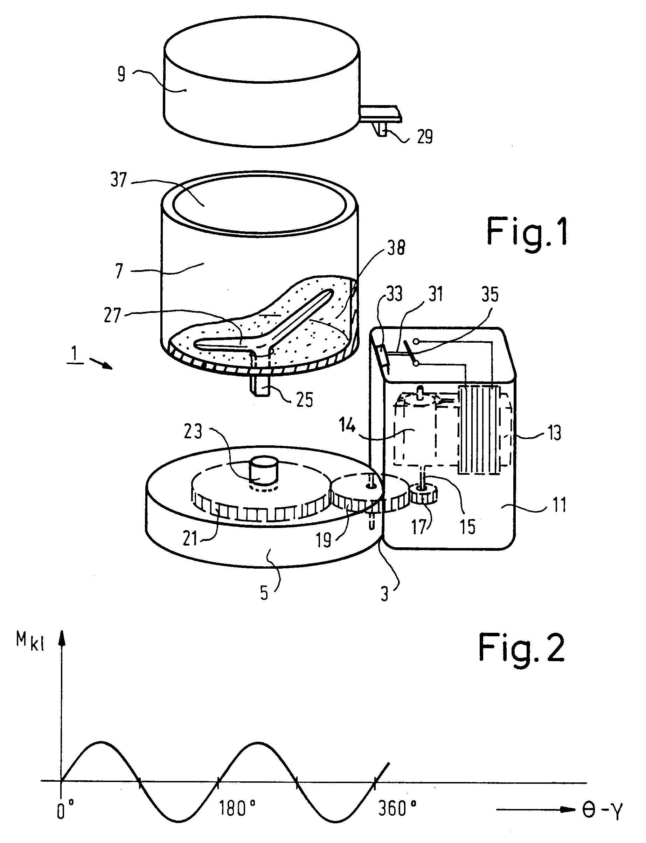

Das in Fig. 1 dargestellte kleine Haushaltsgerät kann ein Zwiebelschneider, ein Schnitzelwerk, ein Fleischwolf oder dergl. sein. Das in Explosionsdarstellung wiedergegebene Gerät 1 weist einen Grundkörper 3 auf, der mit einem Fuß 5 versehen ist. Auf den Fuß 5 ist ein Zerkleinerungsbehälter 7 aufsetzbar, der mit einem Deckel 9 geschlossen werden kann.

In einem Motorgehäuse 11 des Grundkörpers befindet sich ein Einphasensynchronmotor 13 mit einem Rotor 14. Die Motorwelle 15 des Einphasensynchronmotors 13 treibt über ein Ritzel 17 und ein Zwischenzahnrad 19 ein Messerrad 21 an. Das Messerrad ist mit einer aus dem Gehäuse des Fußes 5 hervorragenden Aufnahme 23 für die Welle 25 eines Schlagmessers 27 versehen.

Am Deckel 9 ist ein Schaltzapfen 29 für einen Motorschalter 31 vorgesehen. Wenn der Schaltzapfen 29 in eine Ausnehmung 33 des Motorgehäuses 11 eingreift, dann wird über einen Schaltarm 35 der Einphasensynchronmotor eingeschaltet.

Die Benutzung des kleinen Haushaltsgerätes erfolgt in der Art, daß zunächst der Zerkleinerungsbehälter 7 auf den Fuß 5 aufgesetzt wird, wobei eine drehschlüssige Verbindung zwischen der Welle 25 und der Aufnahme 23 zustandekommt. Nun kann der Innenraum 37 mit einer bestimmten Menge eines zu zerkleinernden Gutes 38 gefüllt werden. Wird nun der Deckel 9 auf den Zerkleinerungsbehälter 7 aufgesetzt und greift der Schaltzapfen 29 in die Ausnehmung 33 des Motorgehäuses, dann läuft der Einphasensynchronmotor 13 an, und das Schlagmesser 27 kann das eingebrachte, zu zerkleinernde Gut 38 zerkleinern.

In einer speziellen Ausführungsform ist das kleine Haushaltsgerät so ausgelegt, daß im Leerlauf bei einer Coulombschen Restreibung von 10 cmp beim Anheben des Deckels 9 und damit beim Ausschalten des Schalters 31 die Welle 15 des Einphasensynchronmotors aufgrund des Klebemomentes dieses Einphasensynchronmotors 13 vorzugsweise spätestens nach 6 Umdrehungen des Motors oder 175 msec zum Stehen gebracht wird. Dies beruht auf dem Klebemoment des Einphasensynchronmotors 13 und einer Begrenzung des wirksamen Gesamtträgheitsmomentes auf ca. 7,5 gr.cm$^2$. Eine vollständige Umdrehung der Motorwelle 15 entspricht beim Einsatz eines zwischengeschalteten, aus Ritzel 17, Zwischenzahnrad 19 und Messerrad 21 bestehenden Getriebes nur einem dem Übersetzungsverhältnis entsprechenden Bruchteil einer Umdrehung des Schlagmessers 27. Ein Benutzer kann auch bei größter Geschicklichkeit nicht innerhalb von 175 msec nach dem Anheben des Deckels mit den Fingern an das Schlagmesser heran. Damit besorgt der Einsatz eines Einphasensynchronmotors 13 insbesondere in Verbindung mit dem Zwischengetriebe 17, 19, 21 einen Schnell-Stop des Schlagmessers 27, der den Einsatz einer Bremse erübrigt Das rasche Anhalten des Schlagmessers 27 ist dann gewährleistet, wenn die Differenz der kinetischen Energie aller umlaufenden Teile und der während des Bremsvorganges durch Bremsmomente, wie Reibung, vernichteten Energie kleiner ist als die Amplitude des Klebemomentes entsprechend der Beziehung

$$1/2 \; Jges \cdot \hat{\dot{\theta}}^2 \; - \int_0^{T_{zul}} M_L \cdot \dot{\theta} \, dt < \hat{M}_{kl}$$

Fig. 2 zeigt den Verlauf des magnetischen Klebemomentes $M_{kl}$ über dem Drehwinkel $\theta$- $\gamma$, wobei $\theta$ eine die Rotorposition gegenüber der Hauptrichtung des Statorfeldes kennzeichnende Koordinate ist. $\gamma$ ist der für Einphasensynchronmotor typische Asymmetriewinkel; er kennzeichnet die räumliche Verschiebung der 0-Durchgänge von Strommoment und dem bei stromlosen Statorspulen auftretenden Klebemoment. Die in Fig. 2 dargestellte Kurve zeigt einen sinusförmigen Verlauf des Klebemomentes, wobei die Periodendauer gleich einer halben Rotorumdrehung und die Amplitude bei dem erläuterten Beispiel eines Einphasensynchronmotors mit einer Kippleistung von ca. 10 W ungefähr 150 cmp beträgt.

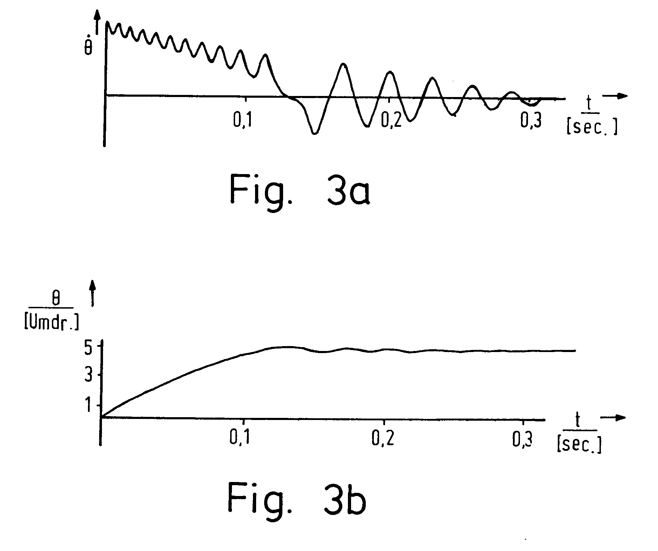

Fig. 3a zeigt einen simulierten Auslaufvorgang eines Einphasensynchronmotors von ca. 10 W, wobei die Rotorgeschwindigkeit über der Zeit aufgetragen ist. Aufgrund der Bremsmomente wird der Motor nach dem Abschalten des Schalters 31 langsamer. Der Einfluß des Klebemomentes macht sich bemerkbar in einer Pulsation der abklingenden Winkelgeschwindigkeit. Der Rotor kommt früher als ohne Klebemoment zum Stillstand und wird schließlich durch das magnetische Klebemoment in der Auslaufposition festgehalten.

Fig. 3b zeigt den gleichen Auslaufvorgang des Rotors in einer anderen Darstellung, wobei der Auslaufwinkel über der Zeit dargestellt ist. Nach 5 Umdrehungen und einer Zeit von ca. 130 msec ist der Auslaufvorgang im wesentlichen beendet. Der Auslaufvorgang beginnt wie in Fig. 3a mit dem Öffnen des Schalters 31 und endet, wie Fig. 3b zeigt, nach 5 Umdrehungen.

**Patentansprüche**

1. Kleines elektrisches Haushaltsgerät mit einem umlaufenden Messer, wie ein Schnitzelwerk, ein Schlagwerk und ein Fleischwolf, bei dem das Messer von einem Elektromotor innerhalb eines mit einem Deckel verschließbaren Behälters antreibbar und beim bzw. vor dem Deckelöffnen rasch anhaltbar ist, dadurch gekennzeichnet, daß der Antriebsmotor (13) ein Einphasensynchronmotor ist und daß der Gesamtaufbau des Systems aus Motor (13) und Belastung (27, 38) derart ausgelegt ist, daß die Differenz zwischen der kinetischen Energie aller umlaufenden Teile (15, 16, 17, 19, 21, 27, 38) und der während des Bremsvorganges innerhalb der zulässigen Auslaufzeit $T_{zul}$ durch Bremsmomente, wie Reibung, vernichteten Energie kleiner ist als die zur Überwindung des Klebemomentes erforderliche Energie, deren Wert gleich dem Amplitudenwert des Klebemomentes ist, entsprechend der Beziehung:

$$1/2 \; Jges \cdot \hat{\dot{\theta}}^2 \; - \int_0^{T_{zul}} M_L \cdot \dot{\theta} \, dt < \dot{M}_{kl}$$

wobei

Jges  das gesamte, auf die Achse des Rotors reduzierte Trägheitsmoment aller rotierenden Geräteteile (15, 16, 17, 19, 21, 27, 38) ist,

$\hat{\dot{\theta}}$  der Spitzenwert der mechanischen Motor-Winkelgeschwindigkeit ist,

EP 0 257 705 B1

$\dot{\theta}$       der Augenblickswert der mechanischen Motorgeschwindigkeit ist

$M_L$       das gesamte, auf den Rotor (16) wirkende Bremsmoment ist,

$T_{zul}$       die zulässige Auslaufzeit ist,

$\hat{M}_{kl}$       die Amplitude des Motorklebemomentes ist.

2.    Kleines Haushaltsgerät nach Anspruch 1, dadurch gekennzeichnet, daß die zulässige Auslaufzeit $T_{zul}$ desRotors ca. 175 msec ist.

**Claims**

1.    A small electric domestic appliance with a rotating knife, such as a blender, a beater, and a mincer, in which the knife can be driven by an electric motor inside a container which can be closed with a lid and can be quickly stopped during or before opening of the lid, characterized in that the drive motor (13) is a single-phase synchronous motor and the total construction of the system comprising motor (13) and load (27, 38) is so arranged that the difference between the kinetic energy of all rotating parts (15, 16, 17, 19, 21, 27, 38) and the energy consumed by braking moments such as friction during the braking process within the admissible run-down time $T_{zul}$ is smaller than the energy required for overcoming the moment of adherence, the value of which equals the amplitude value of the moment of adherence in accordance with the relation

$$\tfrac{1}{2}\, Jges \cdot \hat{\dot{\theta}}^2 - \int_0^{Tzul} M_L \cdot \dot{\theta}_{dt} < \hat{M}_{kl}$$

in which

Jges       is the total moment of inertia of all rotating appliance parts (15, 16, 17, 19, 21, 27, 38) in relation to the rotor axis,

$\hat{\dot{\theta}}$       is the maximum value for the mechanical angular motor speed,

$\dot{\theta}$       is the instantaneous value of the mechanical motor speed,

$M_L$       is the total braking moment acting upon the rotor (16),

$T_{zul}$       is the admissible run-down time, and

$\hat{M}_{kl}$       is the amplitude of the moment of adherence of the motor.

2.    A small domestic appliance as claimed in Claim 1, characterized in that the admissible run-down time $T_{zul}$ of the rotor is approximately 175 msec.

**Revendications**

1.    Petit appareil électroménager à couteau rotatif, comme un hachoir, un batteur et un hache-viande, dans lequel le couteau peut être entraîné par un moteur électrique à l'intérieur d'un récipient pouvant être fermé par un couvercle et peut être arrêté rapidement lors de l'ouverture du couvercle ou avant celle-ci, caractérisé en ce que le moteur d'entraînement (13) est un moteur synchrone monophasé et que la structure d'ensemble du système formé du moteur (13) et de la charge (27, 38) est conçue telle que la différence entre l'énergie cinétique de toutes les pièces tournantes (15, 16, 17, 19, 21, 27, 38) et l'énergie consommée pendant l'opération de freinage dans le temps de ralentir par inertie admissible $T_{adm}$ par des moments de freinage, comme la friction, est inférieure à l'énergie nécessaire pour surmonter le moment de collage, dont la valeur est égale à la valeur d'amplitude du moment de collage, conformément à la relation suivante :

$$1/2\, Jtot \cdot \hat{\dot{\theta}}^2 - \int_0^{T_{adm}} M_L \cdot \dot{\theta}_{dt} < \hat{M}_{cl}$$

où :

Jtot        est le moment d'inertie total, réduit sur l'axe du rotor, de toutes les pièces tournantes (15, 16, 17, 19, 21, 27, 38) de l'appareil,

$\hat{\dot{\theta}}$        est la valeur de pointe de la vitesse angulaire mécanique du moteur,

$\dot{\theta}$        est la valeur instantanée de la vitesse mécanique du moteur,

$M_L$        est le moment de freinage total agissant sur le rotor (16),

$T_{adm}$        est le temps de ralentir par inertie admissible,

$\hat{M}_{cl}$        est l'amplitude du moment de collage du moteur.

2.   Petit appareil électroménager suivant la revendication 1, caractérisé en ce que le temps de ralentir par inertie admissible $T_{adm}$ du rotor est d'environ 175 ms.

Fig.1

Fig.2

Fig. 3a

Fig. 3b